# EUROPÄISCHE PATENTSCHRIFT

(11) **EP 2 245 374 B1**
(45) Veröffentlichungstag und Bekanntmachung des Hinweises auf die Patenterteilung: **15.11.2017**
(21) Anmeldenummer: 09713304.5
(22) Anmeldetag: 11.02.2009
(51) Int. Cl.: F23R 3/00, F23R 3/04

(54) **THERMISCHE MASCHINE**
THERMAL MACHINE
MACHINE THERMIQUE

(30) Priorität: 20.02.2008 CH 243082008
(43) Veröffentlichungstag der Anmeldung: 03.11.2010
(73) Patentinhaber: General Electric Technology GmbH, 5400 Baden (CH)
(72) Erfinder: HÄHNLE, Hartmut, 79790 Küssaberg (DE); VOGEL, Gregory, Plam Beach Gardens Florida 33410 (US); JONES, Russell Bond, Jupiter Florida 33458 (US); DUGGANS, Marion Oneil, West Palm Beach Florida 33409 (US); TSCHUOR, Remigi, CH-5210 Windisch (CH)
(74) Vertreter: General Electric Technology GmbH
(86) Internationale Anmeldenummer: PCT/EP2009/051537
(87) Internationale Veröffentlichungsnummer: WO 2009/103636

(56) Entgegenhaltungen:
- EP-A- 0 203 431
- EP-A- 0 640 745
- EP-A- 1 143 107
- EP-A- 1 321 713
- EP-A- 1 443 182
- EP-A- 1 486 732
- DE-A1- 2 836 539
- DE-A1- 4 244 303
- DE-A1- 4 324 035
- GB-A- 2 407 373
- US-A- 2 594 808
- US-A- 3 169 367

## Beschreibung

### Technisches Gebiet

Die vorliegende Erfindung bezieht sich auf das Gebiet der thermischen Maschinen. Sie betrifft eine thermische Maschine gemäss dem Oberbegriff des Anspruchs 1.

### Stand der Technik

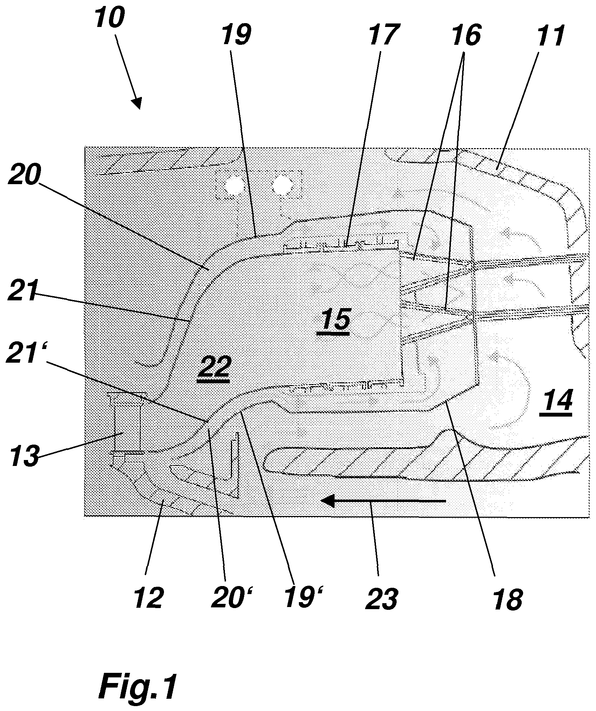

Gasturbinen, wie sie von der Anmelderin beispielsweise unter anderen unter der Typenbezeichnung GT13E2 angeboten werden, werden mit einer Ringbrennkammer betrieben. Die Verbrennung selbst geschieht vorzugsweise, aber nicht ausschliesslich, über Vormischbrenner (im folgenden kurz Brenner genannt), wie sie beispielsweise aus EP-A1-321 809 oder EP-A1 -704 657 hervorgehen. Eine solche Ringbrennkammer geht beispielsweise aus DE-A1-196 44 378 hervor, welche Ringbrennkammer in der Fig. 1 dieser Anmeldung ausschnittsweise wiedergegeben ist. Die in Fig. 1 dieser Anmeldung dargestellte Gasturbine 10 hat ein Turbinengehäuse 11, welches im Bereich der Brennkammer 15 ein mit verdichteter Verbrennungsluft gefülltes Plenum 14 umschliesst. Konzentrisch um den zentralen Rotor 12 herum ist im Plenum 14 die ringförmige Brennkammer 15 angeordnet, die in einen Heissgaskanal 22 übergeht. Der Raum der Brennkammer 15 wird nach innen durch eine Innenschale 21' und nach aussen durch eine Aussenschale 21 begrenzt. Innenschale 21' und Aussenschale 21 sind jeweils in einer Trennebene in ein Oberteil und ein Unterteil aufgeteilt. Oberteil und Unterteil von Innen- und Aussenschale 21', 21 sind in der Trennebene so verbunden, dass ein Ringraum gebildet wird, der das von den Brennern 16 erzeugte Heissgas auf die Laufschaufeln 13 der Turbine leitet. Die Trennebene ist zur Montage und Demontage der Maschine erforderlich. Die Brennkammer 15 selbst ist mit speziellen Wandsegmenten 17 ausgekleidet.

Innenschale und Aussenschale 21', 21 sind in der beschriebenen Ausführung konvektiv gekühlt. Dabei strömt Kühlluft, die als Verdichterluftstrom 23 vom Verdichter kommend in das Plenum 14 eintritt, vornehmlich in entgegengesetzter Strömungsrichtung des Heissgases im Heissgaskanal 22. Vom Plenum 14 strömt die Kühlluft dann durch einen äusseren und inneren Kühlkanal 20 bzw. 20' weiter, welche Kühlkanäle durch die Schalen 21,21' im Abstand umgebende Kühlhemden 19, 19' gebildet werden. Die Kühlluft strömt dann in den Kühlkanälen 20, 20' entlang den Schalen 21, 21' in Richtung der die Brennkammer 15 umgebenden Brennkammerhaube 18. Dort steht die Luft dann den Brennern 16 als Verbrennungsluft zur Verfügung.

Von den Brennern strömt das Heissgas zur Turbine und dabei entlang der heissgasseitigen Oberflächen der Innen- und Aussenschale 21', 21. Der Druckverlust, der für die Kühlung zur Verfügung steht, wird durch die thermodynamischen Prozessrandbedingungen vorgegeben. Ein Anstieg des Druckabfalls wirkt sich negativ auf den Wirkungsgrad der Gasturbine aus. Eine effiziente Art der Kühlung bei lokal hohen Wärmeübergangskoeffizienten stellt die Prallkühlung dar, bei der das Kühlmedium in Form von Strahlen senkrecht auf die zu kühlende Fläche prallt. Die Wirkung der Prallkühlung (mittlerer Wärmeübergangskoeffizient) in einem existierenden Prallkühlblech wird jedoch durch eine Querströmung von Kühlluft in Richtung des Kühlkanals abgeschwächt.

EP-A1-640745 beschreibt eine thermische Maschine gemäß dem Oberbegriff des Anspruchs 1.

### Darstellung der Erfindung

Es ist Aufgabe der Erfindung, eine thermische Maschine der eingangs genannten Art so auszubilden, dass sich durch eine deutlich verbesserte Kühlung ein entsprechend verbesserter Wirkungsgrad ergibt.

Die Aufgabe wird durch die Gesamtheit der Merkmale des Anspruchs 1 gelöst. Wesentlich für die Erfindung ist, dass am Eingang des Kühlkanals ein Prallkühlblech vorgesehen ist, durch dessen Prallkühllöcher Kühlmedium senkrecht zur Wand des Heissgaskanals in den Kühlkanal eintritt und auf die Wand des Heissgaskanals aufprallt, wobei das Prallkühlblech zur Verringerung einer Querströmung des Kühlmediums im Kühlkanal mit der eingangsseitigen Kante dichtend an die Wand des Heissgaskanals anstösst.

Eine Ausgestaltung der Erfindung zeichnet sich dadurch aus, dass die Wand am Eingang des Kühlkanals eine nach aussen vorstehende Schulter aufweist, dass das Prallkühlblech mit der eingangsseitigen Kante dichtend an die Schulter anstösst ,dass das Prallkühlblech mit der eingangsseitigen Kante lose an der Schulter anliegt, und das Prallkühlblech an der eingangsseitigen Kante mit einer sich an der Kante entlang erstreckenden Dichtung versehen ist. Vorzugsweise ist die Dichtung an der Kante des Prallkühlblechs befestigt, wobei die Dichtung vorteilhafterweise mit der Kante des Prallkühlblechs stoffschlüssig verbunden, insbesondere verschweisst, ist.

Gemäss einer bevorzugten Weiterbildung dieser Ausgestaltung weist die Dichtung ein U-förmiges Querschnittsprofil auf und ist so an der Kante angeordnet, dass die offene Seite des U-Profils von der Schulter abgewandt ist. Insbesondere liegt die Dichtung mit zwei zueinander senkrecht stehenden Anlageflächen an der Schulter an. Erfindungsgemäss wird das Prallkühlblech mittels Abstandselementen in einem vorgegebenen Abstand von der Aussen- bzw. Innenschale gehalten. Eine wesentliche Ausgestaltung der Erfindung zeichnet sich dadurch aus, dass das Prallkühlblech von der eingangsseitigen Kante ausgehend in Gegenrichtung zum Heissgasstrom aufeinander folgend einen parallel zur Wand verlaufenden Endbereich, einen S-förmig nach aussen gebogenen Übergangsbereich und einen parallel zur Wand verlaufenden Anschlussbereich umfasst, und dass im Übergangsbereich Einlässe vorgesehen sind, durch welche das Kühlmedium parallel zur Wand in den Kühlkanal einströmen kann.

Vorzugsweise werden die Einlässe jeweils durch eine nach innen abgebogene Lasche im Prallkühlblech gebildet, wobei in den Einlässen parallel zur Strömungsrichtung orientierte Leitbleche angeordnet sind. Erfindungsgemäss ist im Endbereich des Prallkühlblechs in der Fläche verteilt eine Mehrzahl von Prallkühllöchern vorgesehen.

Gemäss einer anderen Ausgestaltung der Erfindung ist die thermische Maschine eine Gasturbine mit einer Brennkammer, wobei der Heissgaskanal von der Brennkammer zu einer ersten Reihe von Laufschaufeln führt. Insbesondere ist die Brennkammer ringförmig ausgebildet und in einer Trennebene auftrennbar, wobei der Heissgaskanal durch eine Aussenschale und eine Innenschale begrenzt wird, und durch ein entsprechendes inneres und äusseres Kühlhemd wird ein innerer und ein äusserer Kühlkanal ausgebildet. Weiterhin umfasst die Gasturbine einen Verdichter zur Verdichtung angesaugter Verbrennungsluft, wobei der Ausgang des Verdichters mit einem Plenum in Verbindung steht, und die Brennkammer mit dem daran anschliessenden Heissgaskanal und den angrenzenden Kühlkanälen so im Plenum angeordnet und vom Plenum umgeben ist, dass verdichtete Luft aus dem Plenum entgegen dem Heissgasstrom im Heissgaskanal durch die Kühlkanäle zu an der Brennkammer angeordneten Brennern strömt.

Die Brenner sind dabei vorzugsweise als Vormischbrenner ausgebildet, wie dies am Anfang der Beschreibung dargelegt wurde
Gemäss einer vorteilhaften Weiterbildung ist an der Aussenschale bzw. Innenschale ein Flansch mit einer nach aussen vorstehenden Schulter angebracht, insbesondere angeschweisst, wobei das Prallkühlblech mit der eingangsseitigen Kante dichtend an die Schulter anstösst.

### Kurze Erläuterung der Figuren

Die Erfindung soll nachfolgend anhand von Ausführungsbeispielen im Zusammenhang mit der Zeichnung näher erläutert werden. Alle für das unmittelbare Verständnis der Erfindung nicht erforderlichen Elemente sind weggelassen worden. Gleiche Teile sind in den verschiedenen Figuren mit den gleichen Bezugszeichen versehen. Die Strömungsrichtung der Medien ist mit Pfeilen angegeben. Es zeigen
- Fig. 1: den Längsschnitt durch eine gekühlte Ringbrennkammer einer Gasturbine nach dem Stand der Technik;
- Fig. 2: einen Längsschnitt durch den äusseren Kühlkanal einer Gasturbine analog zu Fig. 1 mit einem eingangsseitigen Prallkühlblech gemäss einem Ausführungsbeispiel der Erfindung;
- Fig. 3: in einer perspektivischen Seitenansicht ein Segment des Prallkühlblechs nach Fig. 2, welches im Bereich der Trennebene der Ringbrennkammer eine spezielle Ausgestaltung aufweist;
- Fig. 4: einen vergrösserten Ausschnitt der kantenseitigen Abdichtung des Prallkühlblechs aus Fig. 2 mit einer Dichtung;
- Fig. 5: eine bevorzugte Befestigungsart der Dichtung an der Kante des Prallkühlblechs;
- Fig. 6: einen Längsschnitt durch das Prallkühlblech aus Fig. 2; und
- Fig. 7: in einer zu Fig. 3 vergleichbaren Darstellung ein Segment des Prallkühlblechs nach Fig. 2, welches ausserhalb des Bereiches der Trennebene zum Einsatz kommt.

### Wege zur Ausführung der Erfindung

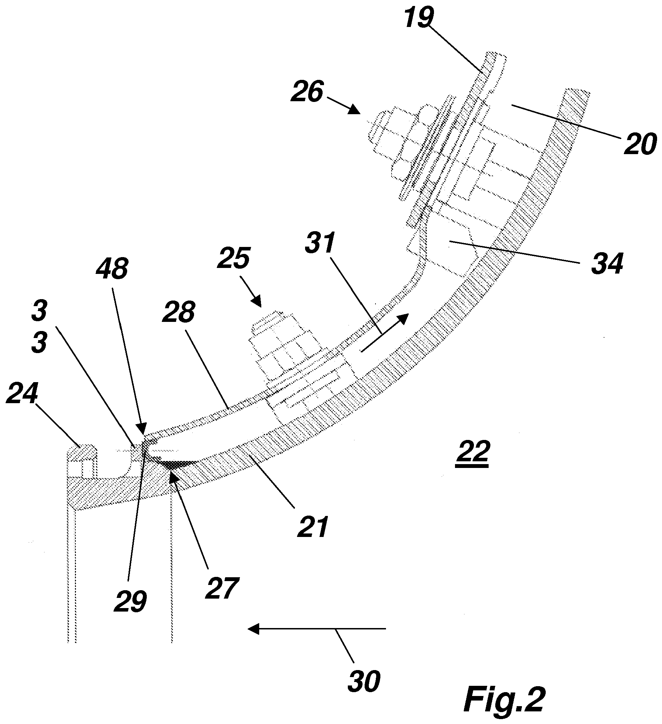

Fig. 2 zeigt einen Längsschnitt durch den äusseren Kühlkanal einer Gasturbine analog zu Fig. 1 mit einem eingangsseitigen Prallkühlblech gemäss einem Ausführungsbeispiel der Erfindung. Dargestellt ist nur der turbinenseitige Endabschnitt der den Heissgaskanal 22 als Wand begrenzenden Aussenschale 21, die in einen angeschweissten Flansch 24 übergeht (Schweissnaht 27). Das äussere Kühlhemd 19, das durch entsprechende Abstandselemente 26 mit Abstand zur Aussenschale 21 an dieser befestigt ist und einen äusseren Kühlkanal 20 nach aussen begrenzt, endet bereits deutlich vor dem Flansch 24.

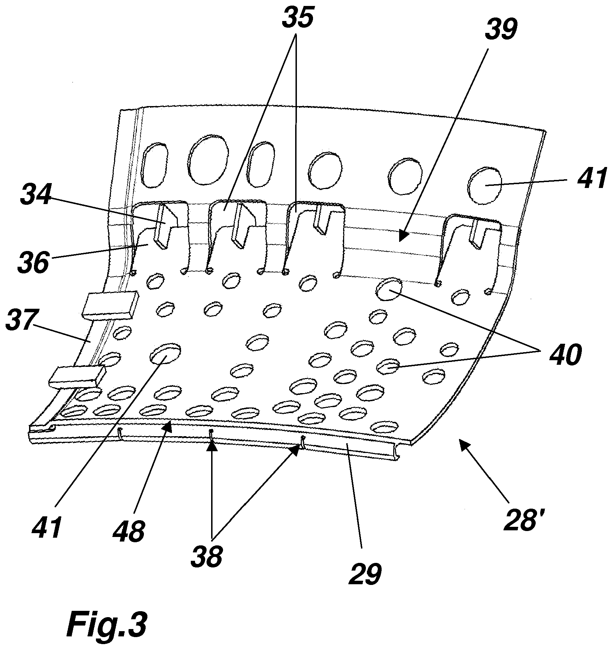

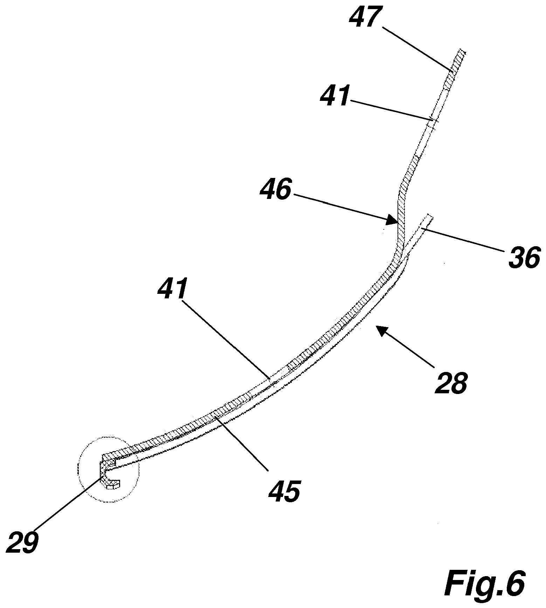

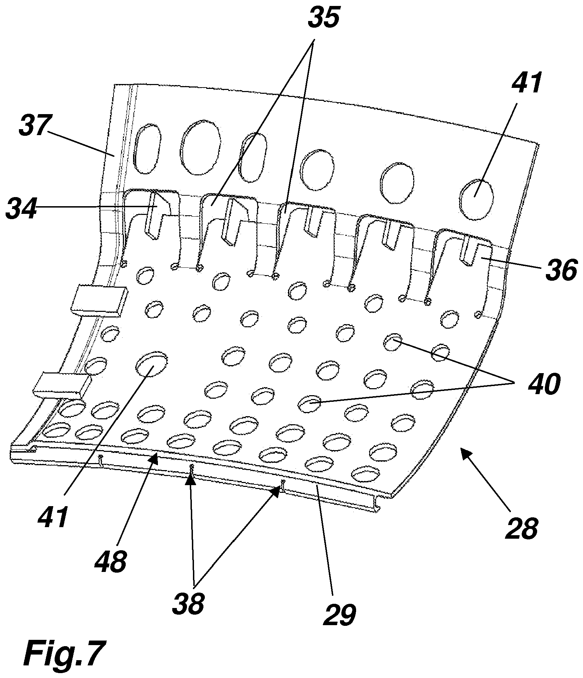

Zwischen dem Ende des äusseren Kühlhemds 19 und dem Flansch 24 ist als Quasi-Verlängerung des Kühlhemds 19 ein Prallkühlblech 28 eingepasst, das in verschiedenen Ausgestaltungen und Ansichten in Fig. 3, Fig. 6 und Fig. 7 wiedergegeben ist, wobei die Fig. 3 und 7 jeweils nur ein Segment des insgesamt ringförmigen Bleches zeigen, während in Fig. 6 der Längsschnitt durch das Blech dargestellt ist. Das Prallkühlblech 28 bzw. 28' ist in Strömungsrichtung in drei verschiedene Bereiche unterteilt (Fig. 6), nämlich einen an den Flansch 24 anstossenden Endbereich 45, einen S-förmig gebogenen Übergangsbereich 46 und einen Anschlussbereich 47.

Im Endbereich 45 und im Anschlussbereich 47 sind verteilt über den Umfang des Heissgaskanals 22 Befestigungslöcher 41 angebracht, mittels derer das Prallblech 28, 28' über entsprechende Abstandselemente 25 und 26 an der Aussenschale 21 mit Abstand befestigt ist. Die Abstandselemente 26 werden gleichzeitig für die Befestigung von äusserem Kühlhemd 19 und Prallkühlblech 28, 28' benutzt, wodurch ein kontinuierlicher Übergang zwischen Prallkühlblech 28, 28' und äusserem Kühlhemd 19 realisiert wird.

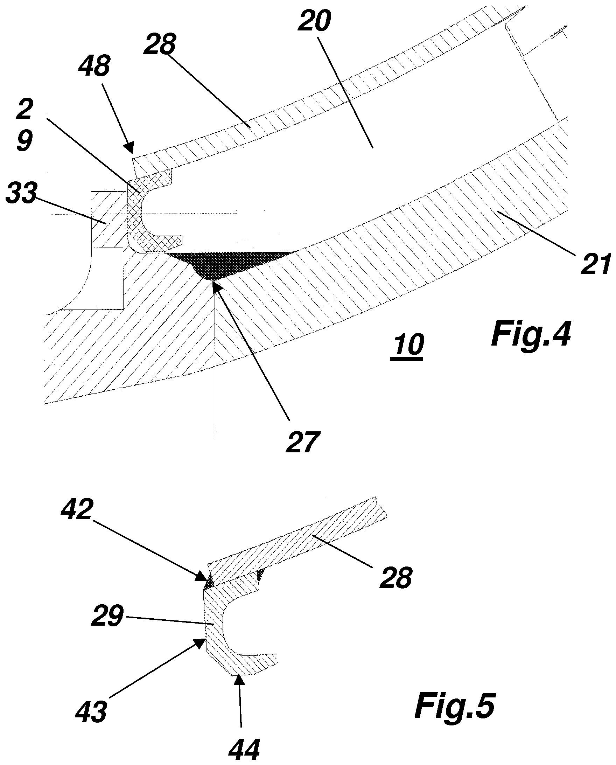

Am flanschseitigen Ende des Prallkühlblechs, d.h. an der den Endbereich 45 begrenzenden Querkante, ist eine Dichtung 29 angeordnet, die an einer am Flansch 24 ausgebildeten, nach aussen vorstehenden und umlaufenden Schulter 33 dichtend anliegt. Die Dichtung 29, die ein U-förmiges Querschnittsprofil aufweist, ist gemäss Fig. 5 vorzugsweise am Prallkühlblech 28 (bzw. 28') stoffschlüssig befestigt, insbesondere angeschweisst (Schweissverbindung 42). Die streifenförmige Dichtung 29 ist mit der offenen Seite zum äusseren Kühlkanal 20 orientiert, so dass die offene Seite des U-Profils von der Schulter 33 abgewandt ist. Die Dichtung 29 liegt mit zwei zueinander senkrecht stehenden Anlageflächen 43, 44 an der Schulter 33 an und kann sich relativ zur Schulter bewegen, so dass thermisch bedingte Verschiebungen ausgeglichen werden können. Die Prallkühlblech-Segmente 28, 28' weisen jeweils an einer Längsseite einen Anschlussstreifen 37 auf, der den Anschluss zum nächsten, benachbarten Segment herstellt.

Im Endbereich 45 des Prallkühlblechs 28, 28' ist in der Fläche verteilt eine Mehrzahl von Prallkühllöchern 40 vorgesehen, durch die von aussen Kühlluft in den Zwischenraum zwischen Prallkühlblech 28, 28' und Aussenschale 21 eintritt und als Strahl senkrecht auf die Aussenseite der Aussenschale 21 prallt. Nach dem Aufprallen und der damit verbundenen Kühlung der Aussenschale 21 strömt die Kühlluft als Kühlluftstrom 31 entgegen der Strömungsrichtung des Heissgasstroms 30 in den äusseren Kühlkanal 20 ein um schliesslich als Verbrennungsluft in die Brenner 16 zu gelangen. Da das flanschseitige Ende des Prallkühlblechs 28, 28' dichtend an der Schulter 33 des Flansches 24 anliegt, kann dort praktisch keine Kühlluft in den Zwischenraum zwischen Prallkühlblech 28, 28' und Aussenschale 21 eintreten und als Querströmung die Prallkühlung beeinträchtigen. Die Querströmung (Kühlluftstrom 31) ist so auf das absolute Minimum beschränkt, das durch die Kühlluft gegeben ist, die durch die Prallkühllöcher 40 eintritt. Es können jedoch in der Dichtung 29 in der Längsrichtung verteilt Schlitze 38 oder vergleichbare Öffnungen vorgesehen werden (Fig. 3, 7), durch die eine kontrollierte Kühlluftmenge an der Schulter 33 entlang in den Zwischenraum zwischen Prallkühlblech 28, 28' und Aussenschale 21 eintritt und den Flansch 24 im Bereich der Schulter 33 zusätzlich kühlt.

Im Übergangsbereich 46 des Prallkühlblechs 28, 28' sind durch ausgeschnittene und nach innen gebogene Laschen 36 über den Umfang verteilt Einlässe 35 angeordnet, durch die aus dem Plenum 14 nahezu ungehindert grosse Mengen Kühlluft in Strömungsrichtung (31) in den äusseren Kühlkanal 20 zur konvektiven Kühlung der Aussenschale 21 einströmen können. In der Mitte der Einlässe 35 ist jeweils ein in Strömungsrichtung orientiertes, senkrecht stehendes Leitblech 34 angeordnet, dass die Kühlluftströmung richtungsstabilisiert. Die Leitbleche 34 sind in Fig. 6 nicht dargestellt.

Die Verteilung der Prallkühllöcher 40 und der Einlässe 35 ist - wie ein Vergleich von Fig. 3 und Fig. 7 zeigt - in den Segmenten 28 und 28' unterschiedlich: Im Prallkühlblech-Segment 28' der Fig. 3, das die Trennebene der Brennkammer überdeckt, ist im Trennebenenbereich 39 kein Einlass vorgesehen. Dafür ist die Dichte und die Anzahl der Prallkühllöcher 40 in diesem Bereich gegenüber den Nachbarbereichen erhöht. Im Prallkühlblech-Segment 28 der Fig. 7, das ausserhalb der Trennebene eingesetzt wird, ist eine gleichmässige Verteilung der Prallkühllöcher 40 und Einlässe 35 vorgesehen.

Durch die erläuterte Anordnung wird eine Kühlung der Aussenschale (und Innenschale) der Gasturbine erreicht, die von einer reinen und ungestörten Prallkühlung am flanschseitigen in eine konvektive Kühlung übergeht. Durch die Optimierung der Verteilung der Prallkühllöcher 40 kann dabei die Kühlung lokal angepasst und insgesamt optimiert werden.

### Bezugszeichenliste

- 10: Gasturbine
- 11: Turbinengehäuse
- 12: Rotor
- 13: Laufschaufel
- 14: Plenum
- 15: Brennkammer
- 16: Brenner (Doppelkegel- bzw. EV-Brenner
- 17: Wandelement
- 18: Brennkammerhaube
- 19: äusseres Kühlhemd
- 19': inneres Kühlhemd
- 20: äusserer Kühlkanal
- 20': innerer Kühlkanal
- 21: Aussenschale
- 21': Innenschale
- 22: Heissgaskanal
- 23: Verdichterluftstrom
- 24: Flansch
- 25,26: Abstandselement
- 27: Schweissnaht
- 28,28': Prallkühlblech
- 29: Dichtung
- 30: Heissgasstrom
- 31: Kühlluftstrom
- 33: Schulter (umlaufend)
- 34: Leitblech
- 35: Einlass
- 36: Lasche
- 37: Anschlussstreifen
- 38: Schlitz
- 39: Trennebenenbereich
- 40: Prallkühlloch
- 41: Befestigungsloch
- 42: Schweissverbindung
- 43,44: Anlagefläche
- 45: Endbereich
- 46: Übergangsbereich
- 47: Anschlussbereich
- 48: Kante (Prallkühlblech)

## Patentansprüche

1. Thermische Maschine, insbesondere Gasturbine (10), umfassend einen Heissgaskanal (22) zum Weiterleiten eines Heissgasstromes (30), der von einer Wand (21, 21 ') begrenzt ist, die aussen von einem Kühlkanal (20, 20') umgeben ist, in dem ein Kühlmedium, insbesondere Kühlluft, in Gegenrichtung zum Heissgasstrom (30) von einem Eingang des Kühlkanals (20, 20') zu einem Ausgang an der Aussenseite der Wand (21 , 21') entlang geführt werden kann, wobei der Kühlkanal (20, 20') von der Wand (21 , 21 ') des Heissgas- kanals (22) und von einem aussen mit Abstand von der Wand (21 , 21 ') angeordneten Kühlhemd (19, 19') gebildet wird, und wobei am Eingang des Kühlkanals (20, 20') ein Prallkühlblech (28, 28') vorgesehen ist, das von einer eingangsseitigen Kante (48) ausgehend in Gegenrichtung zum Heissgasstrom (30) aufeinander folgend einen parallel zur Wand (21, 21 ') verlaufenden Endbereich (45), in dem in der Fläche verteilt eine Mehrzahl von Prallkühllöcher (40) vorgesehen ist, durch die Kühlmedium senkrecht zur Wand (21 , 21 ') des Heissgaskanals (22) in den Kühlkanal (20, 20') eintreten kann und auf die Wand (21 , 21 ') des Heissgaskanals (22) aufprallen kann, einen S-förmig nach aussen gebogenen Übergangsbereich (46), in dem Einlässe (35) vorgesehen sind, durch welche das Kühlmedium parallel zur Wand (21 '21 ') in den Kühlkanal (20, 20') einströmen kann, und einen parallel zur Wand (21, 21 ') verlaufenden Anschlussbereich (47) umfasst, **dadurch gekennzeichnet, dass** in dem Anschlussbereich Befestigungslöcher (41) vorgesehen sind, mittels der das Prallkühlblech (28, 28') über Abstandselemente (26) gemeinsam mit dem äusseren Kühlhemd (19) derart befestigt ist, dass ein kontinuierlicher Übergang zwischen Prallkühlblech (28, 28') und äusserem Kühlhemd (19) realisiert ist,
und dass das Prallkühlblech (28, 28') zur Verringerung einer Querströmung des Kühlmediums im Kühlkanal (20, 20') mit der eingangsseitigen Kante (48) dichtend an die Wand (21 , 21 ') des Heissgaskanals (22) anstösst.

2. Thermische Maschine nach Anspruch 1 , **dadurch gekennzeichnet, dass** die Wand (21, 21 ') am Eingang des Kühlkanals (20, 20') eine nach aussen vorstehende Schulter (33) aufweist, und dass das Prallkühlblech (28, 28') mit der eingangsseitigen Kante (48) dichtend an die Schulter (33) anstösst.

3. Thermische Maschine nach Anspruch 2, **dadurch gekennzeichnet, dass** das Prallkühlblech (28, 28') mit der eingangsseitigen Kante (48) lose an der Schulter (33) anliegt.

4. Thermische Maschine nach Anspruch 3, **dadurch gekennzeichnet, dass** das Prallkühlblech (28, 28') an der eingangsseitigen Kante (48) mit einer sich an der Kante (48) entlang erstreckenden Dichtung (29) versehen ist.

5. Thermische Maschine nach Anspruch 4, **dadurch gekennzeichnet, dass** die Dichtung (29) an der Kante (48) des Prallkühlblechs (28, 28') befestigt ist.

6. Thermische Maschine nach Anspruch 5, **dadurch gekennzeichnet, dass** die Dichtung (29) mit der Kante (48) des Prallkühlblechs (28, 28') stoffschlüssig verbunden, insbesondere verschweisst, ist.

7. Thermische Maschine nach einem der Ansprüche 4 bis 6, **dadurch gekennzeichnet, dass** die Dichtung (29) ein U-förmiges Querschnittsprofil aufweist, und dass die Dichtung (29) so an der Kante (48) angeordnet ist, dass die offene Seite des U-Profils von der Schulter (33) abgewandt ist.

8. Thermische Maschine nach Anspruch 7, **dadurch gekennzeichnet, dass** die Dichtung (29) mit zwei zueinander senkrecht stehenden Anlageflächen (43, 44) an der Schulter (33) anliegt.

9. Thermische Maschine nach Anspruch 1, **dadurch gekennzeichnet, dass** die Einlasse (35) jeweils durch eine nach innen abgebogene Lasche (36) im Prallkühlblech (28, 28') gebildet werden.

10. Thermische Maschine nach Anspruch 9, **dadurch gekennzeichnet, dass** in den Einlassen (35) parallel zur Strömungsrichtung orientierte Leitbleche (34) angeordnet sind.

11. Thermische Maschine nach einem der Ansprüche 1 bis 10, **dadurch gekennzeichnet, dass** die thermische Maschine eine Gasturbine (10) mit einer Brennkammer (15) ist, und dass der Heissgaskanal (22) von der Brennkammer (15) zu einer ersten Reihe von Laufschaufeln (13) führt.

12. Thermische Maschine nach Anspruch 11, **dadurch gekennzeichnet, dass** die Brennkammer (15) ringförmig ausgebildet und in einer Trennebene auftrennbar ist, dass der Heissgaskanal (22) durch eine Aussenschale (21) und eine Innenschale (21') begrenzt wird, und dass durch ein entsprechendes inneres und äusseres Kühlhemd (19 bzw. 19') ein innerer und äusserer Kühlkanal (20 bzw. 20') ausgebildet wird.

13. Thermische Maschine nach Anspruch 12, **dadurch gekennzeichnet, dass** die Gasturbine (10) einen Verdichter zur Verdichtung angesaugter Verbrennungsluft umfasst, dass der Ausgang des Verdichters mit einem Plenum (14) in Verbindung steht, und dass die Brennkammer (15) mit dem daran anschliessenden Heissgaskanal (22) und den angrenzenden Kühlkanälen (20, 20') so im Plenum (14) angeordnet und vom Plenum (14) umgeben ist, dass verdichtete Luft aus dem Plenum (14) entgegen dem Heissgasstrom im Heissgaskanal (22) durch die Kühlkanäle (20, 20') zu an der Brennkammer (15) angeordneten Brennern (16) strömt.

14. Thermische Maschine nach Anspruch 13, **dadurch gekennzeichnet, dass** die Brenner (16) als Vormischbrenner ausgebildet sind.

15. Thermische Maschine nach einem der Ansprüche 12 bis 14, **dadurch gekennzeichnet, dass** an der Aussenschale (21) bzw. Innenschale (21 ') ein Flansch (24) mit einer nach aussen vorstehenden Schulter (33) angebracht, insbesondere angeschweisst ist, und dass das Prallkühlblech (28, 28') mit der eingangsseitigen Kante (48) dichtend an die Schulter (33) anstösst.

## Claims

1. Thermal machine, in particular a gas turbine (10), comprising a hot gas duct (22) for transferring a hot gas stream (30) which is delimited by a wall (21, 21') which is surrounded on the outside by a cooling duct (20, 20') in which a cooling medium, in particular cooling air, can be conducted along the external face of the wall (21, 21') from an inlet of the cooling duct (20, 20') to an outlet counter to the direction of flow (30) of the hot gas, wherein the cooling duct (20, 20') is formed by the wall (21, 21') of the hot gas duct (22) and by a cooling jacket (19, 19') which is arranged on the outside at a distance from the wall (21, 21'), and wherein a cooling baffle plate (28, 28') is provided at the inlet of the cooling duct (20, 20'), cooling baffle plate (28, 28') includes, in succession in the direction counter to the stream (30) of hot gas starting from an inflow-side edge (48), an end region (45) which runs parallel to the wall (21, 21') and in which a plurality of cooling baffle holes (40) are provided, distributed over the surface cooling medium being able to enter the cooling duct (20, 20') through said cooling baffle holes (40) perpendicularly with respect to the wall (21, 21') of the hot gas duct (22) and being able to impinge on the wall (21, 21') of the hot gas duct (22), a junction region (46) which is bent outward in an S shape and in which inlets (35), through which the cooling medium can flow into the cooling duct (20, 20') parallel to the wall (21, 21'), are provided, and a connecting region (47) which runs parallel to the wall (21, 21'),
**Characterized in that** attachment holes (41) are provided in the connecting region, by means of which attachment holes (41) the cooling baffle plate (28, 28') is attached using spacer elements (26) together with the outer cooling jacket (19) in such a way that a continuous junction is implemented between the cooling baffle plate (28, 28') and the outer cooling jacket (19),
and **in that**, in order to reduce a transverse flow of the cooling medium in the cooling duct (20, 20'), the inflow-side edge (48) of the cooling baffle plate (28, 28') abuts the wall (21, 21') of the hot gas duct (22) in a seal-forming fashion.

2. Thermal machine according to Claim 1, **characterized in that** the wall (21, 21') has an outwardly protruding shoulder (33) at the inlet of the cooling duct (20, 20'), and **in that** the inflow-side edge (48) of the cooling baffle plate (28, 28') abuts the shoulder (33) in a seal-forming fashion.

3. Thermal machine according to Claim 2, **characterized in that** the inflow-side edge (48) of the cooling baffle plate (28, 28') loosely bears against the shoulder (33).

4. Thermal machine according to Claim 3, **characterized in that** the cooling baffle plate (28, 28') is provided, on the inflow-side edge (48), with a seal (29) which extends along the edge (48).

5. Thermal machine according to Claim 4, **characterized in that** the seal (29) is attached to the edge (48) of the cooling baffle plate (28, 28').

6. Thermal machine according to Claim 5, **characterized in that** the seal (29) is connected in a materially joined fashion, in particular welded, to the edge (48) of the cooling baffle plate (28, 28').

7. Thermal machine according to one of Claims 4 to 6, **characterized in that** the seal (29) has a U-shaped cross-sectional profile, and **in that** the seal (29) is arranged on the edge (48) in such a way that the open side of the U profile faces away from the shoulder (33).

8. Thermal machine according to Claim 7, **characterized in that** the seal (29) bears, with two bearing faces (43, 44) which are perpendicular to one another, against the shoulder (33).

9. Thermal machine according to Claim 10, **characterized in that** the inlets (35) are each formed by an inwardly bent tab (36) in the cooling baffle plate (28, 28').

10. Thermal machine according to Claim 9, **characterized in that** baffles (34) which are oriented parallel to the direction of flow are arranged in the inlets (35).

11. Thermal machine according to one of Claims 1 to 10, **characterized in that** the thermal machine is a gas turbine (10) with a combustion chamber (15), and **in that** the hot gas duct (22) leads from the combustion chamber (15) to a first row of rotor blades (13).

12. Thermal machine according to Claim 11, **characterized in that** the combustion chamber (15) is of annular design and can be separated in a separating plane in such a way that the hot gas duct (22) is delimited by an outer shell (21) and an inner shell (21'), and **in that** an outer and an inner cooling duct (20 and 20', respectively) are formed by a corresponding outer and inner cooling jacket (19 and 19', respectively).

13. Thermal machine according to Claim 12, **characterized in that** the gas turbine (10) comprises a compressor for compressing sucked-in combustion air, **in that** the outlet of the compressor is connected to a plenum (14), and **in that** the combustion chamber (15) is arranged with the adjoining hot gas duct (22) and the adjoining cooling ducts (20, 20') in the plenum (14), and is surrounded by the plenum (14), in such a way that compressed air flows out of the plenum (14), counter to the flow of hot gas in the hot gas duct (22), through the cooling ducts (20, 20') to burners (16) which are arranged at the combustion chamber (15).

14. Thermal machine according to Claim 13, **characterized in that** the burners (16) are embodied as premixer burners.

15. Thermal machine according to one of Claims 12 to 14, **characterized in that** a flange (24) with an outwardly protruding shoulder (33) is attached, in particular welded on, to the outer shell (21) or inner shell (21'), and **in that** the inflow-side edge (48) of the cooling baffle plate (28, 28') abuts the shoulder (33) in a seal-forming fashion.

## Revendications

1. Machine thermique, en particulier turbine à gaz (10), comprenant un conduit de gaz chauds (22) destiné au transport d'un flux de gaz chauds (30), qui est limité par une paroi (21, 21') qui est entourée extérieurement d'un conduit de refroidissement (20, 20') dans lequel un agent de refroidissement, en particulier de l'air de refroidissement, peut être guidé en sens contraire du flux de gaz chauds (30) à partir d'une entrée du conduit de refroidissement (20, 20') vers une sortie sur le côté extérieur de la paroi (21, 21'), le conduit de refroidissement (20, 20') étant formé par la paroi (21, 21') du conduit de gaz chauds (22) et par une chemise de refroidissement (19, 19') disposée à l'extérieur à distance de la paroi (21, 21') ;
et une tôle de refroidissement par impact (28, 28') étant prévue à l'entrée du conduit de refroidissement (20, 20'), laquelle, à partir d'une arête (48) côté entrée, en sens inverse du flux de gaz chauds (30), comprend successivement une zone d'extrémité (45), parallèle à la paroi (21, 21'), dans laquelle il est prévu, de façon répartie sur la surface, une pluralité de trous de refroidissement (40) par impact à travers lesquels de l'agent de refroidissement peut pénétrer dans le conduit de refroidissement (20, 20') perpendiculairement à la paroi (21, 21') du conduit de gaz chauds (22) et peut réaliser un impact sur la paroi (21, 21') du conduit de gaz chauds (22),
une zone de transition (46), courbée vers l'extérieur en forme de S, dans laquelle des entrées (35) sont prévues, à travers lesquelles l'agent de refroidissement peut entrer dans le conduit de refroidissement (20, 20') parallèlement à la paroi (21, 21') et une zone de raccordement (47) parallèle à la paroi (21, 21'), **caractérisée en ce que**, dans la zone de raccordement, il est prévu des trous de fixation (41) au moyen desquels la tôle de refroidissement par impact (28, 28') est fixée, par le biais d'éléments d'espacement (26), conjointement avec la chemise de refroidissement (19) extérieure de telle sorte qu'une transition continue est réalisée entre la tôle de refroidissement par impact (28, 28') et la chemise de refroidissement (19) extérieure,
et **en ce que**, pour réduire un écoulement transversal de l'agent de refroidissement dans le conduit de refroidissement (20, 20'), la tôle de refroidissement par impact (28, 28') vient, avec l'arête (48) côté entrée, s'appuyer de façon étanche sur la paroi (21, 21') du conduit de gaz chauds (22).

2. Machine thermique selon la revendication 1, **caractérisée en ce que** la paroi (21, 21') présente, à l'entrée du conduit de refroidissement (20, 20'), un épaulement (33) faisant saillie vers l'extérieur, et **en ce que** la tôle de refroidissement par impact (28, 28') vient, avec l'arête (48) côté entrée, s'appuyer de façon étanche contre l'épaulement (33).

3. Machine thermique selon la revendication 2, **caractérisée en ce que** la tôle de refroidissement par impact (28, 28') est, avec l'arête (48) côté entrée, posée de façon lâche contre l'épaulement (33).

4. Machine thermique selon la revendication 3, **caractérisée en ce que**, sur l'arête (48) côté entrée, la tôle de refroidissement par impact (28, 28') est munie d'une étanchéité (29) s'étendant le long de l'arête (48).

5. Machine thermique selon la revendication 4, **caractérisée en ce que** l'étanchéité (29) est fixée sur l'arête (48) de la tôle de refroidissement par impact (28, 28').

6. Machine thermique selon la revendication 5, **caractérisée en ce que** l'étanchéité (29) est raccordée par liaison de matière, en particulier soudée, à l'arête (48) de la tôle de refroidissement par impact (28, 28').

7. Machine thermique selon l'une des revendications 4 à 6, **caractérisée en ce que** l'étanchéité (29) présente un profil de section transversale en forme de U, et **en ce que** l'étanchéité (29) est disposée sur l'arête (48) de telle sorte que le côté ouvert du profil en U est éloigné de l'épaulement (33).

8. Machine thermique selon la revendication 7, **caractérisée en ce que** l'étanchéité (29) est, avec deux surfaces d'appui (43, 44) perpendiculaires entre elles, posée contre l'épaulement (33).

9. Machine thermique selon la revendication 1, **caractérisée en ce que** les entrées (35) sont respectivement formées par une languette (36) recourbée vers l'intérieur dans la tôle de refroidissement par impact (28, 28').

10. Machine thermique selon la revendication 9, **caractérisée en ce que**
des tôles de guidage (34) orientées parallèlement à la direction d'écoulement sont disposées dans des entrées (35).

11. Machine thermique selon l'une des revendications 1 à 10, **caractérisée en ce que** la machine thermique est une turbine à gaz (10) avec une chambre de combustion (15), et **en ce que** le conduit de gaz chauds (22) conduit de la chambre de combustion (15) vers une première série de pales (13).

12. Machine thermique selon la revendication 11, **caractérisée en ce que** la
chambre de combustion (15) est constituée sous forme annulaire, et peut être séparée dans un plan de séparation, **en ce que** le conduit de gaz chauds (22) est limité par une coque extérieure (21) et une coque intérieure (21'), et **en ce qu'**un canal de refroidissement intérieur et extérieur (20 ou respectivement 20') est constitué par une chemise de refroidissement (19 ou respectivement 19') intérieure et extérieure correspondante.

13. Machine thermique selon la revendication 12, **caractérisée en ce que** la
turbine à gaz (10) comprend un compresseur pour la compression de l'air de combustion aspiré, **en ce que** la sortie du compresseur est en liaison avec un plénum (14), et **en ce que** la chambre de combustion (15), avec le canal de gaz chauds (22) qui y est raccordé et avec les conduits de refroidissement (20, 20') contigus, est disposée dans le plénum (14) et entourée par le plénum (14) de telle sorte que l'air compressé s'écoule hors du plénum (14), à l'inverse du flux de gaz chauds, dans le canal de gaz chauds (22) à travers les conduits de refroidissement (20, 20') vers des brûleurs (16) disposés sur la chambre de combustion (15).

14. Machine thermique selon la revendication 13, **caractérisée en ce que** les
brûleurs (16) sont constitués en tant que brûleurs à prémélange.

15. Machine thermique selon l'une des revendications 12 à 14, **caractérisée en ce que**, sur la coque extérieure (21) ou respectivement la coque intérieure (21'), une bride (24) avec un épaulement (33) faisant saillie vers l'extérieur est mise en place, en particulier soudée, et **en ce que** la tôle de refroidissement par impact (28, 28') vient, avec l'arête (48) côté entrée, s'appuyer de façon étanche sur l'épaulement (33).
